# EUROPEAN PATENT APPLICATION

(11) **EP 4 715 637 A1**
(43) Date of publication of application: **25.03.2026**
(21) Application number: 25161343.6
(22) Date of filing: 03.03.2025
(51) Int. Cl.: G06F 21/10, G06F 21/12, G06Q 30/0645, H04N 1/44, H04N 1/34, H04N 1/00

(54) **INFORMATION PROCESSING SYSTEM, INFORMATION PROCESSING METHOD, PROGRAM, AND IMAGE FORMING SYSTEM**

(30) Priority: 19.09.2024 JP 2024162556
(71) Applicant: FUJIFILM Business Innovation Corp., Minato-ku Tokyo (JP)
(72) Inventor: KATO, Chihaya, Yokohama-shi (JP)
(74) Representative: Haseltine Lake Kempner LLP

(57) **Abstract**

An information processing system includes a processor configured to: if a usage contract period has expired, activate a use-prohibited state that prohibits use of at least some functions of the system; output, as first printed material, inquiry information containing at least one piece of information from among identification information for the system and identification information for a user who uses the system; and release the use-prohibited state of the system according to use-prohibited state release instruction information outputted in response to the inquiry information outputted as the first printed material.

## Description

### Background

### (i) Technical Field

The present disclosure relates to an information processing system, an information processing method, a program, and an image forming system.

### (ii) Related Art

Japanese Unexamined Patent Application Publication No. 2011-097527 describes a communication system capable of blocking a communication device that has committed a temporary unauthorized action, and also capable of reinstating the communication device in few steps once the communication device is no longer committing the unauthorized action.

### Summary

A technology has been proposed to prohibit the use of an information processing system for which a usage contract period has passed. Information on the usage contract period of an information processing system is managed in a management server. The information processing system, having been put into a use-prohibited state, may release the use-prohibited state by connecting to the management server over the Internet after the usage contract period is renewed. In other words, if the information processing system is not connected to the Internet, it may not be possible to release the use-prohibited state.

Accordingly, it is an object of the present disclosure to provide an information processing system, an information processing method, a program, and an image forming system capable of releasing the use-prohibited state even when not connected to the Internet.

According to a first aspect of the present disclosure, there is provided an information processing system including a processor configured to: if a usage contract period has expired, activate a use-prohibited state that prohibits use of at least some functions of the system; output, as first printed material, inquiry information containing at least one piece of information from among identification information for the system and identification information for a user who uses the system; and release the use-prohibited state of the system according to use-prohibited state release instruction information outputted in response to the inquiry information outputted as the first printed material.

According to a second aspect of the present disclosure, in the information processing system according to the first aspect, the information processing system is an image forming apparatus provided with a communication unit, an image reading unit, and an image printing unit.

According to a third aspect of the present disclosure, in the information processing system according to the second aspect, the processor is configured to: output the first printed material from the image printing unit; acquire use-prohibited state release instruction information by using the image reading unit to read second printed material outputted in response to the inquiry information outputted as the first printed material; and release the use-prohibited state of the system according to the acquired use-prohibited state release instruction information.

According to a fourth aspect of the present disclosure, in the information processing system according to any of one the first to third aspects, the first printed material is a printout of an image obtained by converting digital data of the inquiry information to a code image.

According to a fifth aspect of the present disclosure, in the information processing system according to the fourth aspect, the first printed material is printed in such a way as to be readable only with a specific image reading apparatus.

According to a sixth aspect of the present disclosure, there is provided an information processing method including: if a usage contract period has expired, activating a use-prohibited state that prohibits use of at least some functions of a system; outputting, as first printed material, inquiry information containing at least one piece of information from among identification information for the system and identification information for a user who uses the system; and releasing the use-prohibited state of the system according to use-prohibited state release instruction information outputted in response to the inquiry information outputted as the first printed material.

According to a seventh aspect of the present disclosure, there is provided a program causing a computer to execute a process including: if a usage contract period has expired, activating a use-prohibited state that prohibits use of at least some functions of a system; outputting, as first printed material, inquiry information containing at least one piece of information from among identification information for the system and identification information for a user who uses the system; and releasing the use-prohibited state of the system according to use-prohibited state release instruction information outputted in response to the inquiry information outputted as the first printed material.

According to an eighth aspect of the present disclosure, there is provided an image forming system including: a first image forming apparatus provided with a first communication unit, a first image reading unit, a first image printing unit, and a first processor; and a second image forming apparatus provided with a second communication unit, a second image reading unit, a second image printing unit, and a second processor. If a usage contract period has expired, the first processor is configured to activate a use-prohibited state that prohibits use of at least some functions of the first image forming apparatus. The first processor is configured to output, as first printed material from the first image printing unit, inquiry information containing identification information for the first image forming apparatus. The second processor is configured to use the second communication unit to transmit, to a management server that manages usage contract periods, inquiry information acquired by using the second image reading unit to read the first printed material. The second processor is configured to output, as second printed material from the second image printing unit, use-prohibited state release instruction information transmitted from the management server in response to the transmitted inquiry information. The first processor is configured to release the use-prohibited state of the first image forming apparatus according to the use-prohibited state release instruction information acquired by using the first image forming unit to read the second printed material.

According to the information processing system as in the first aspect, it is possible to release the use-prohibited state even when the system is not connected to the Internet.

According to the information processing system as in the second aspect, it is possible to release the use-prohibited state of an image forming apparatus.

According to the information processing system as in the third aspect, it is possible to release the use-prohibited state of an image forming apparatus.

According to the information processing system as in the fourth aspect, it is possible to output the first printed material in a form suitable for reading digital data.

According to the information processing system as in the fifth aspect, it is possible to restrict the type of image reading apparatus that is to read the first printed material.
According to the information processing method as in the sixth aspect, it is possible to release the use-prohibited state even when the system is not connected to the Internet.

According to the program as in the seventh aspect, it is possible to release the use-prohibited state even when the system is not connected to the Internet.

According to the image forming system as in the eighth aspect, it is possible to release the use-prohibited state by using another image forming apparatus, even when the system is not connected to the Internet.

### Brief Description of the Drawings

An exemplary embodiment of the present disclosure will be described in detail based on the following figures, wherein:
Fig. 1 is a diagram illustrating a system configuration of an image forming system according to an exemplary embodiment of the present disclosure;
Fig. 2 is a block diagram illustrating a hardware configuration of first and second image forming apparatuses according to an exemplary embodiment of the present disclosure;
Fig. 3 is a block diagram illustrating a hardware configuration of a management server according to an exemplary embodiment of the present disclosure;
Fig. 4 is a diagram illustrating display examples on a touch panel in a first image forming apparatus;
Fig. 5 is a diagram for explaining a process by an image forming system according to an exemplary embodiment of the present disclosure;
Fig. 6 is a diagram for explaining a method of creating a document containing inquiry information;
Fig. 7 is a diagram for explaining a method of creating a document containing use-prohibited state release instruction;
Fig. 8 is a flowchart for explaining the flow of a normal inquiry process in an image forming system; and
Fig. 9 is a flowchart for explaining the flow of an inquiry process when a first image forming apparatus is offline in an image forming system.

### Detailed Description

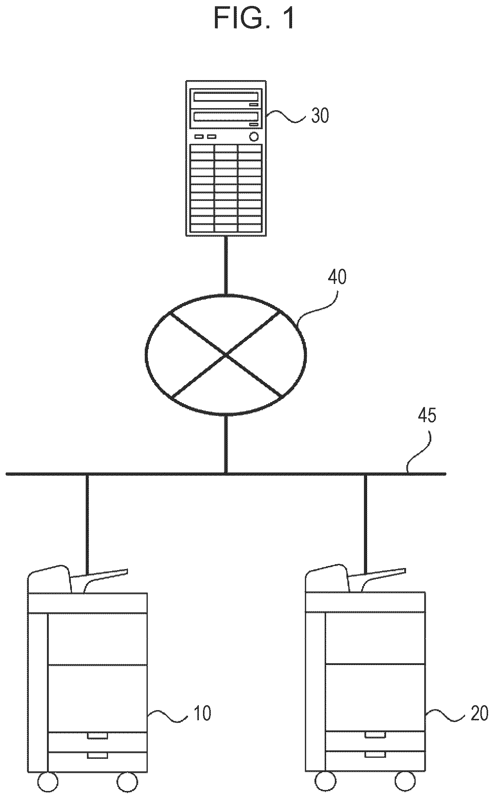

Hereinafter, an exemplary embodiment for carrying out the technology of the present disclosure will be described in detail and with reference to the drawings. Fig. 1 is a diagram illustrating a system configuration of an image forming system according to an exemplary embodiment.

As illustrated in Fig. 1, the image forming system according to the exemplary embodiment includes a first image forming apparatus 10, a second image forming apparatus 20, and a management server 30.

The first image forming apparatus 10 and the second image forming apparatus 20 are each an apparatus referred to as a multi-function peripheral, and includes multiple functions such as a copy function, a print function, a fax function, and a scan function. The first image forming apparatus 10 and the second image forming apparatus 20 are interconnected over a local network 45. The first image forming apparatus 10 is one example of an information processing system in the technology of the present disclosure.

The management server 30 is a server for managing usage contract periods of the first image forming apparatus 10 and the second image forming apparatus 20. The management server 30 is connected to the local network 45 through the Internet 40.

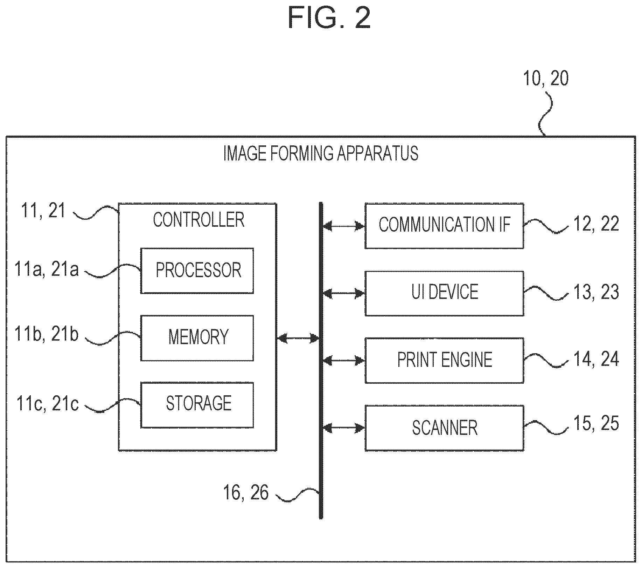

Next, a hardware configuration of the first image forming apparatus 10 according to the exemplary embodiment will be described. Fig. 2 is a block diagram illustrating a hardware configuration of the first image forming apparatus 10. Note that Fig. 2 also serves as a block diagram illustrating a hardware configuration of the second image forming apparatus 20 described later.

As illustrated in Fig. 2, the first image forming apparatus 10 is provided with a controller 11, a communication interface (abbreviated as IF) 12, a user interface (abbreviated as UI) device 13, a print engine 14, and a scanner 15. These components are interconnected through a control bus 16.

The controller 11 is provided with a processor 11a, memory 11b, and storage 11c. The processor 11a executes predetermined processing on the basis of a program read out from the storage 11c and loaded into the memory 11b. The storage 11c is formed from read-only memory (ROM), a hard disk drive (HDD), or a solid-state drive (SSD), for example. The storage 11c stores various programs, data, and the like.

Note that in the exemplary embodiment, the processor 11a is described as reading out and executing a program stored in the storage 11c, but the configuration is not limited thereto. The program may also be provided by being recorded onto a computer-readable recording medium like the above. The program may also be acquired from an external apparatus over a communication channel.

The communication IF 12 transmits and receives data to and from external apparatuses and the like. The UI device 13 is a device such as a touch panel and/or buttons, for example, used by a user to accept and input information. The print engine 14 prints an image onto a recording medium such as printing paper via steps such as charging, exposing, developing, transferring, and fusing. The scanner 15 reads a document loaded into the first image forming apparatus 10 as image data.

The processor 11a is one example of a first processor in the technology of the present disclosure. The communication IF 12 is one example of a first communication unit in the technology of the present disclosure. The print engine 14 is one example of a first image printing unit in the technology of the present disclosure. The scanner 15 is one example of a first image reading unit in the technology of the present disclosure.

Next, a hardware configuration of the second image forming apparatus 20 according to the exemplary embodiment will be described. As illustrated in Fig. 2, the second image forming apparatus 20 is provided with a controller 21, a communication IF 22, a UI device 23, a print engine 24, and a scanner 25. These components are interconnected through a control bus 26. The controller 21 is provided with a processor 21a, memory 21b, and storage 21c.

Since these components are the same as those of the first image forming apparatus 10, a detailed description is omitted.

The processor 21a is one example of a second processor in the technology of the present disclosure. The communication IF 22 is one example of a second communication unit in the technology of the present disclosure. The print engine 24 is one example of a second image printing unit in the technology of the present disclosure. The scanner 25 is one example of a second image reading unit in the technology of the present disclosure.

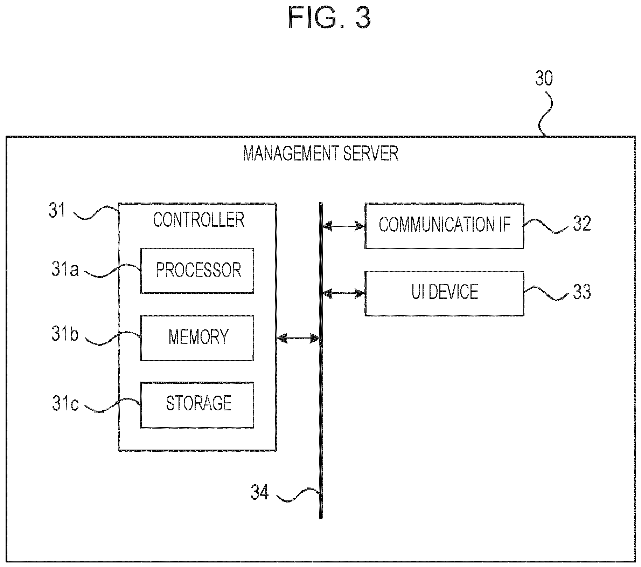

Next, a hardware configuration of the management server 30 according to the exemplary embodiment will be described. Fig. 3 is a block diagram illustrating a hardware configuration of the management server 30.

As illustrated in Fig. 3, the management server 30 is provided with a controller 31, a communication IF 32, and a UI device 33. These components are interconnected through a control bus 34.

The controller 31 is provided with a processor 31a, memory 31b, and storage 31c. The processor 31a executes predetermined processing on the basis of a program read out from the storage 31c and loaded into the memory 31b. The storage 31c is formed from ROM, an HDD, or an SSD, for example. The storage 31c stores various programs, data, and the like.

Note that in the exemplary embodiment, the processor 31a is described as reading out and executing a program stored in the storage 31c, but the configuration is not limited thereto. The program may also be provided by being recorded onto a computer-readable recording medium like the above. The program may also be acquired from an external apparatus over a communication channel.

The communication IF 32 transmits and receives data to and from external apparatuses and the like. The UI device 33 is a device such as a mouse and/or a keyboard, for example, used by a user to input information.

One usage pattern of the first image forming apparatus 10 and the second image forming apparatus 20 involves, for example, the user and a service provider concluding a usage contract, and the user periodically paying the service provider a fee, whereby the service provider lends the first image forming apparatus 10 and the second image forming apparatus 20 to the user and offers a maintenance service that provides consumables for using the first image forming apparatus 10 and the second image forming apparatus 20 and provides troubleshooting and the like when trouble occurs.

In such a usage pattern, for the user to continue using the first image forming apparatus 10 and the second image forming apparatus 20, the user may be required to renew the usage contract by paying a renewal fee by the end of the usage contract period.

If the renewal fee is not paid by the user by the end of the usage contract period, the service provider may prohibit the use of at least some functions of the first image forming apparatus 10 and the second image forming apparatus 20. Such a function is referred to as a device lock.

For example, if the device lock is applied to the first image forming apparatus 10, the use-prohibited state may be released by connecting to the management server 30 over the Internet 40 after the usage contract period is renewed. In other words, if the first image forming apparatus 10 is not connected to the Internet, it may not be possible to release the use-prohibited state.

To address this issue, when the usage contract period expires, the controller 11 of the first image forming apparatus 10 according to the exemplary embodiment applies the device-locked state that prohibits the use of at least some functions of the host apparatus, outputs, as first printed material, inquiry information containing at least one piece of information from among identification information for the host apparatus and identification information for a user who uses the host apparatus, and releases the use-prohibited state of the host apparatus according to use-prohibited state release instruction information outputted in response to the inquiry information outputted as the first printed material.

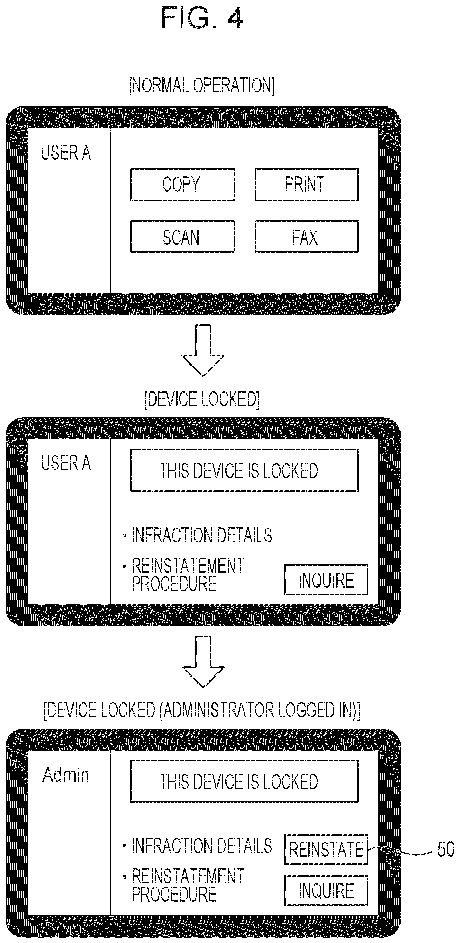

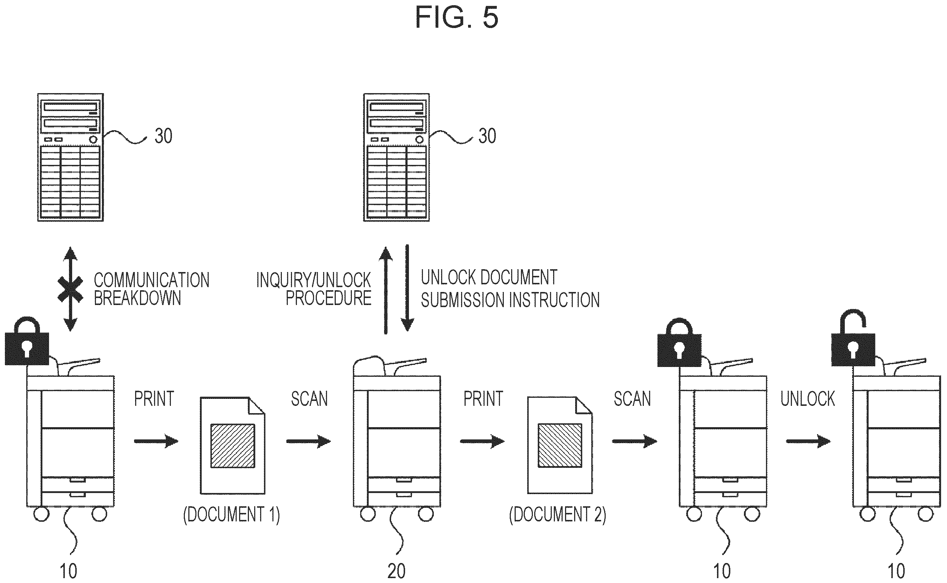

Hereinafter, processing in the image forming system according to the exemplary embodiment will be described in detail. Fig. 4 is a diagram illustrating display examples on a touch panel in the first image forming apparatus 10. Fig. 5 is a diagram for explaining a process by the image forming system according to the exemplary embodiment.

As illustrated in Fig. 4, in the first image forming apparatus 10, during normal operation, the controller 11 displays buttons on a touch panel enabling a user to use functions such as copy, print, scan, and fax.

When the first image forming apparatus 10 enters the device-locked state, the controller 11 displays an indicator to indicate that the device lock is in effect, infraction details, a reinstatement procedure, and the like on the touch panel.

If an administrator user logs back in while the first image forming apparatus 10 is in the device-locked state, the controller 11 additionally displays a reinstate button 50 on the touch panel.

When the reinstate button 50 is pressed, if the first image forming apparatus 10 and the management server 30 are connected over the Internet, the controller 11 inquires the management server 30 as to whether or not the usage contract period has been renewed. If the usage contract period has been renewed, the controller 11 is able to release the device lock.

However, when the reinstate button 50 is pressed, if the first image forming apparatus 10 and the management server 30 are not connected over the Internet, the controller 11 will be unable to inquire the management server 30 as to whether or not the usage contract period has been renewed. Accordingly, the following process is performed.

As illustrated in Fig. 5, the controller 11 of the first image forming apparatus 10 outputs, as first printed material from the print engine 14, inquiry information containing identification information for the first image forming apparatus 10.

The first printed material may be a printout of an image obtained by converting digital data of the inquiry information to a code image. The first printed material may also be a printout of an image obtained by converting encrypted digital data of the inquiry information to a code image. Furthermore, the first printed material may also be printed in such a way as to be readable only with a specific image reading apparatus.

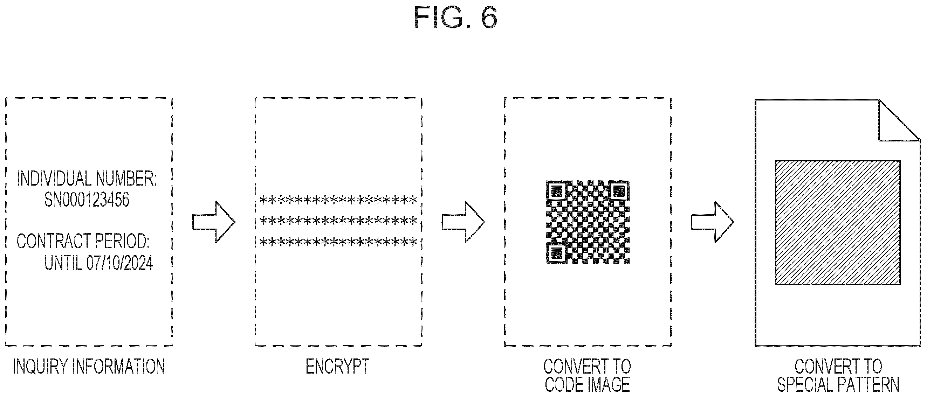

In the exemplary embodiment, the first printed material is created as illustrated in Fig. 6. First, the controller 11 encrypts digital data of inquiry information, which contains an individual number and a contract period. Next, the controller 11 converts the encrypted digital data of the inquiry information to a code image. Next, the controller 11 converts the code image to a special pattern readable only with a specific image reading apparatus, and prints the special pattern as document 1. Hereinafter, the first printed material may be referred to as document 1.

Special pattern conversion means conversion to a state that is unreadable by a nonspecific apparatus other than an apparatus with support for reading special patterns. Special pattern conversion may be, digital watermark printing, for example, in which the content is checkable only when the printed material is read by a compatible apparatus. Special pattern conversion may also involve dividing a print image into multiple regions and printing with the regions are rearranged according to a specific rule, such that the content is checkable only when the printed material is read by a specific apparatus that knows the rule and converts the regions back to the original arrangement. Special pattern conversion is not limited to the above and may be configured in any way.

Next, the controller 21 of the second image forming apparatus 20 uses the communication IF 22 to transmit, to the management server 30, inquiry information acquired by using the scanner 25 to read document 1.

The controller 31 of the management server 30, upon receiving the inquiry information pertaining to the first image forming apparatus 10, checks whether or not the usage contract period of the first image forming apparatus 10 has been renewed. If the usage contract period of the first image forming apparatus 10 has been renewed, the controller 31 of the management server 30 transmits, to the second image forming apparatus 20, use-prohibited state release instruction information for the first image forming apparatus 10.

Next, the controller 21 of the second image forming apparatus 20 outputs, as second printed material from the print engine 24, the use-prohibited state release instruction information transmitted from the management server 30 in response to the transmitted inquiry information.

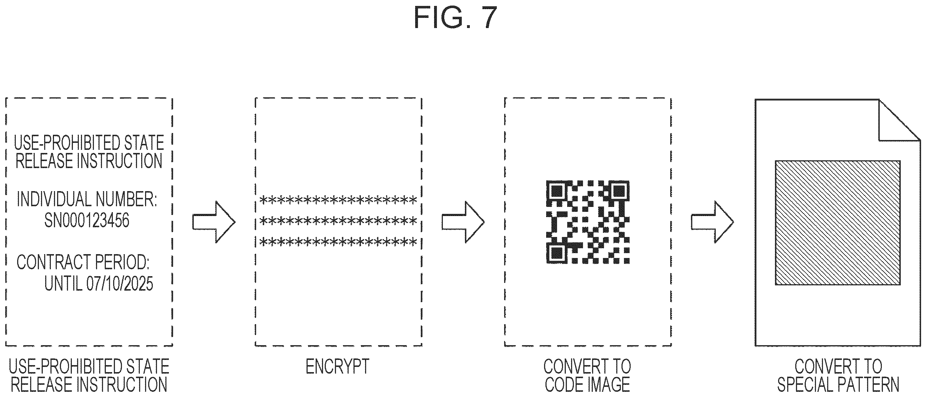

In the exemplary embodiment, the second printed material is created as illustrated in Fig. 7. First, the controller 21 encrypts digital data of the use-prohibited state release instruction information, which contains a use-prohibited state release instruction, the individual number of the apparatus to be unlocked, and a new contract period. Next, the controller 21 converts the encrypted digital data of the use-prohibited state release instruction information to a code image. Next, the controller 21 converts the code image to a special pattern readable only with a specific image reading apparatus, and prints the special pattern as document 2. Hereinafter, the second printed material may be referred to as document 2.

The controller 11 of the first image forming apparatus 10 releases the device lock on the first image forming apparatus 10 according to the use-prohibited state release instruction information acquired by using the scanner 15 to read document 2.

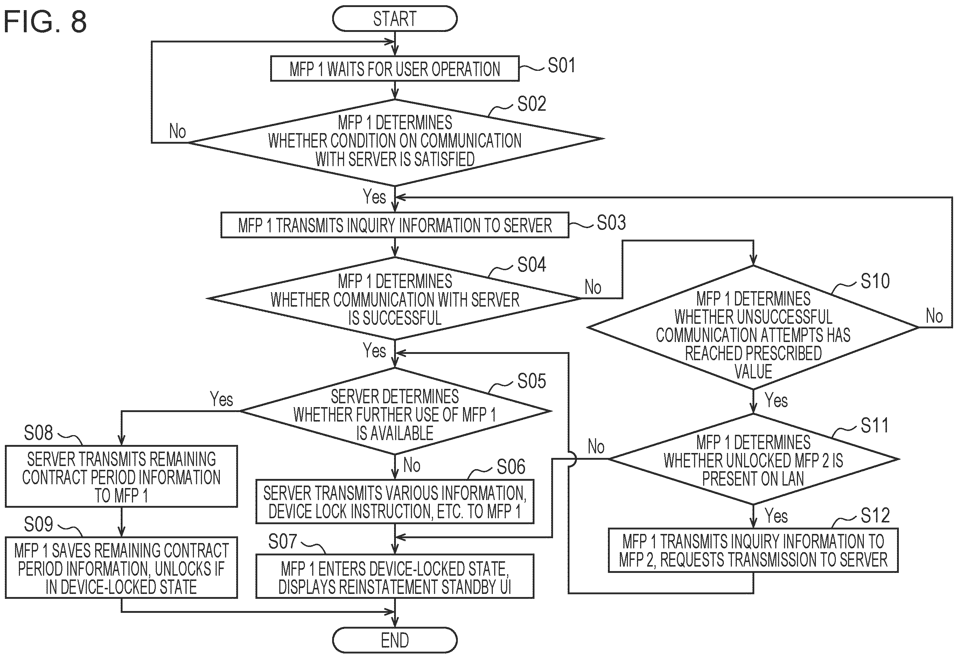

Next, the flow of a normal inquiry process in the image forming system according to the exemplary embodiment will be described with reference to the flowchart in Fig. 8.

First, in step S01, the first image forming apparatus 10 waits for a user operation.

Next, in step S02, the first image forming apparatus 10 determines whether or not a condition on communication with the management server 30 is satisfied.

In step S02, if it is determined that the condition on communication with the management server 30 is not satisfied, the flow proceeds to step S01.

In step S02, if it is determined that the condition on communication with the management server 30 is satisfied, in step S03, the first image forming apparatus 10 transmits inquiry information to the management server 30.

Next, in step S04, the first image forming apparatus 10 determines whether or not communication with the management server 30 is successful.

In step S04, if it is determined that communication with the management server 30 is successful, in step S05, the management server 30 determines whether or not further use of the first image forming apparatus 10 is available.

In step S05, if it is determined that further use of the first image forming apparatus 10 is unavailable, in step S06, the management server 30 transmits various information, a device lock instruction, and the like to the first image forming apparatus 10.

Next, in step S07, the first image forming apparatus 10 enters the device-locked state, displays a reinstatement standby UI, and ends the process.

In step S05, if it is determined that further use of the first image forming apparatus 10 is available, in step S08, the management server 30 transmits remaining contract period information to the first image forming apparatus 10.

Next, in step S09, the first image forming apparatus 10 saves the remaining contract period information, releases the device lock if in effect, and ends the process.

In step S04, if it is determined that communication with the management server 30 is unsuccessful, in step S10, the first image forming apparatus 10 determines whether or not the number of unsuccessful communication attempts has reached a prescribed value.

In step S10, if it is determined that the number of unsuccessful communication attempts has not reached the prescribed value, the flow proceeds to step S03.

In step S10, if it is determined that the number of unsuccessful communication attempts has reached the prescribed value, in step S11, the first image forming apparatus 10 determines whether or not an unlocked second image forming apparatus 20 is present on the local network 45.

In step S11, if it is determined that an unlocked second image forming apparatus 20 is present on the local network 45, in step S12, the first image forming apparatus 10 transmits inquiry information to the second image forming apparatus 20 and requests that the inquiry information be transmitted to the management server 30.

In step S11, if it is determined that an unlocked second image forming apparatus 20 is not present on the local network 45, the flow proceeds to step S07.

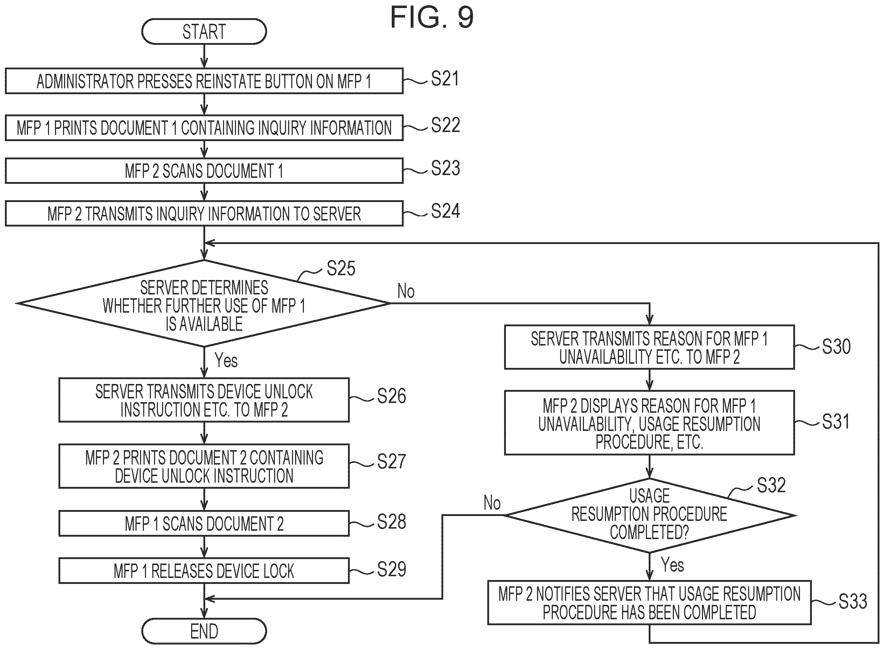

Next, the flow of an inquiry process when the first image forming apparatus 10 is offline in the image forming system according to the exemplary embodiment will be described with reference to the flowchart in Fig. 9.

First, in step S21, an administrator presses the reinstate button 50 on the first image forming apparatus 10.

Next, in step S22, the first image forming apparatus 10 prints document 1 containing inquiry information.

Next, in step S23, the second image forming apparatus 20 scans document 1.

Next, in step S24, the second image forming apparatus 20 transmits inquiry information to the management server 30.

In step S25, the management server 30 determines whether further use of the first image forming apparatus 10 is available.

In step S25, if it is determined that further use of the first image forming apparatus 10 is available, in step S26, the management server 30 transmits a device unlock instruction and the like to the second image forming apparatus 20.

Next, in step S27, the second image forming apparatus 20 prints document 2 containing the device unlock instruction.

Next, in step S28, the first image forming apparatus 10 scans document 2.

Next, in step S29, the first image forming apparatus 10 releases the device lock and ends the process.

In step S25, if it is determined that further use of the first image forming apparatus 10 is unavailable, in step S30, the management server 30 transmits the reason why the first image forming apparatus 10 is unavailable for use and the like to the second image forming apparatus 20.

Next, in step S31, the second image forming apparatus 20 displays the reason why the first image forming apparatus 10 is unavailable for use, a usage resumption procedure, and the like.

Next, in step S32, if the usage resumption procedure is completed, in step S33, the second image forming apparatus 20 notifies the management server 30 that the usage resumption procedure has been completed, and the flow proceeds to step S25.

In step S32, if the usage resumption procedure is not completed, the process ends. Exemplary modifications

The foregoing describes an image forming system according to an exemplary embodiment of the present disclosure, but the technology of the present disclosure is not limited to the exemplary embodiment above, and modifications may also be made, as appropriate.

For example, the exemplary embodiment above describes an example of applying the technology of the present disclosure to an image forming apparatus, but the technology of the present disclosure may also be applied to another apparatus, such as a personal computer. In the case of applying the technology of the present disclosure to an apparatus other than an image forming apparatus, an image containing inquiry information may be generated at the apparatus, and the generated image may be outputted as the first printed material from an external printer.

Likewise, the apparatus which reads the first printed material and transmits inquiry information contained in the first printed material to the management server, and which acquires, from the management server, use-prohibited state release instruction information outputted in response to the inquiry information, is not limited to an image forming apparatus, and may also be another apparatus such as a smartphone, for example.

In the case where the apparatus that transmits inquiry information to the management server and the like is an apparatus other than an image forming apparatus, and the apparatus from which the inquiry originates is an image forming apparatus, as one example, the acquired use-prohibited state release instruction information may be outputted as second printed material from an external printer.

In the case where the apparatus that transmits inquiry information to the management server and the like is an apparatus other than an image forming apparatus, and the apparatus from which the inquiry originates is an apparatus other than an image forming apparatus, as one example, the acquired use-prohibited state release instruction information may be transferred to the apparatus from which the inquiry originates via email or via a recording medium such as Universal Serial Bus (USB) memory.

The transfer of the use-prohibited state release instruction information from the apparatus that transmits inquiry information to the management server and the like to the apparatus from which the inquiry originates may be a transfer by way of the second printed material, and may also be a transfer via email or via a recording medium such as USB memory, if supported by the apparatuses involved.

In the exemplary embodiment above, the term "processor" refers to hardware in a broad sense. Examples of the processor include general processors (e.g., CPU: Central Processing Unit), dedicated processors (e.g., GPU: Graphics Processing Unit, ASIC: Application Integrated Circuit, FPGA: Field Programmable Gate Array, and programmable logic device).

In the exemplary embodiment above, the term "processor" is broad enough to encompass one processor or plural processors in collaboration which are located physically apart from each other but may work cooperatively. The order of operations of the processor is not limited to one described in the exemplary embodiment above, and may be changed.

The system in the technology of the present disclosure refers to both a configuration formed by multiple apparatuses and a configuration formed by a single apparatus.

The technology of the present disclosure is also applicable to a program and a program product.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An information processing system comprising a processor configured to:
   if a usage contract period has expired, activate a use-prohibited state that prohibits use of at least some functions of the system;
   output, as first printed material, inquiry information containing at least one piece of information from among identification information for the system and identification information for a user who uses the system; and
   release the use-prohibited state of the system according to use-prohibited state release instruction information outputted in response to the inquiry information outputted as the first printed material.
(((2))) The information processing system according to (((1))), wherein
   the information processing system is an image forming apparatus provided with a communication unit, an image reading unit, and an image printing unit.
(((3))) The information processing system according to (((2))), wherein the processor is configured to:
   output the first printed material from the image printing unit;
   acquire use-prohibited state release instruction information by using the image reading unit to read second printed material outputted in response to the inquiry information outputted as the first printed material; and
   release the use-prohibited state of the system according to the acquired use-prohibited state release instruction information.
(((4))) The information processing system according to any one of (((1))) to (((3))), wherein
   the first printed material is a printout of an image obtained by converting digital data of the inquiry information to a code image.
(((5))) The information processing system according to (((4))), wherein
   the first printed material is printed in such a way as to be readable only with a specific image reading apparatus.
(((6))) A program causing a computer to execute a process comprising:
   if a usage contract period has expired, activating a use-prohibited state that prohibits use of at least some functions of a system;
   outputting, as first printed material, inquiry information containing at least one piece of information from among identification information for the system and identification information for a user who uses the system; and
   releasing the use-prohibited state of the system according to use-prohibited state release instruction information outputted in response to the inquiry information outputted as the first printed material.
(((7))) An image forming system comprising:
   a first image forming apparatus provided with a first communication unit, a first image reading unit, a first image printing unit, and a first processor; and
   a second image forming apparatus provided with a second communication unit, a second image reading unit, a second image printing unit, and a second processor, wherein
   if a usage contract period has expired, the first processor is configured to activate a use-prohibited state that prohibits use of at least some functions of the first image forming apparatus;
   the first processor is configured to output, as first printed material from the first image printing unit, inquiry information containing identification information for the first image forming apparatus;
   the second processor is configured to use the second communication unit to transmit, to a management server that manages usage contract periods, inquiry information acquired by using the second image reading unit to read the first printed material;
   the second processor is configured to output, as second printed material from the second image printing unit, use-prohibited state release instruction information transmitted from the management server in response to the transmitted inquiry information; and
   the first processor is configured to release the use-prohibited state of the first image forming apparatus according to the use-prohibited state release instruction information acquired by using the first image forming unit to read the second printed material.

The following describes effects produced by (1) to (7) in the appendix.

According to the information processing system as in (((1))), it is possible to release the use-prohibited state even when the system is not connected to the Internet.

According to the information processing system as in (((2))), it is possible to release the use-prohibited state of an image forming apparatus.

According to the information processing system as in (((3))), it is possible to release the use-prohibited state of an image forming apparatus.

According to the information processing system as in (((4))), it is possible to output the first printed material in a form suitable for reading digital data.

According to the information processing system as in (((5))), it is possible to restrict the type of image reading apparatus that is to read the first printed material.

According to the program as in (((6))), it is possible to release the use-prohibited state even when the system is not connected to the Internet.

According to the image forming system as in (((7))), it is possible to release the use-prohibited state by using another image forming apparatus, even when the system is not connected to the Internet.

## Claims

1. An information processing system comprising:
a processor configured to:
if a usage contract period has expired, activate a use-prohibited state that prohibits use of at least some functions of the system;
output, as first printed material, inquiry information containing at least one piece of information from among identification information for the system and identification information for a user who uses the system; and
release the use-prohibited state of the system according to use-prohibited state release instruction information outputted in response to the inquiry information outputted as the first printed material.

2. The information processing system according to claim 1, wherein:
the information processing system is an image forming apparatus provided with a communication unit, an image reading unit, and an image printing unit.

3. The information processing system according to claim 2, wherein the processor is configured to:
output the first printed material from the image printing unit;
acquire use-prohibited state release instruction information by using the image reading unit to read second printed material outputted in response to the inquiry information outputted as the first printed material; and
release the use-prohibited state of the system according to the acquired use-prohibited state release instruction information.

4. The information processing system according to any one of claims 1 to 3, wherein:
the first printed material is a printout of an image obtained by converting digital data of the inquiry information to a code image.

5. The information processing system according to claim 4, wherein:
the first printed material is printed in such a way as to be readable only with a specific image reading apparatus.

6. An information processing method comprising:
if a usage contract period has expired, activating a use-prohibited state that prohibits use of at least some functions of a system;
outputting, as first printed material, inquiry information containing at least one piece of information from among identification information for the system and identification information for a user who uses the system; and
releasing the use-prohibited state of the system according to use-prohibited state release instruction information outputted in response to the inquiry information outputted as the first printed material.

7. A program causing a computer to execute a process comprising:
if a usage contract period has expired, activating a use-prohibited state that prohibits use of at least some functions of a system;
outputting, as first printed material, inquiry information containing at least one piece of information from among identification information for the system and identification information for a user who uses the system; and
releasing the use-prohibited state of the system according to use-prohibited state release instruction information outputted in response to the inquiry information outputted as the first printed material.

8. An image forming system comprising:
a first image forming apparatus provided with a first communication unit, a first image reading unit, a first image printing unit, and a first processor; and
a second image forming apparatus provided with a second communication unit, a second image reading unit, a second image printing unit, and a second processor, wherein
if a usage contract period has expired, the first processor is configured to activate a use-prohibited state that prohibits use of at least some functions of the first image forming apparatus,
the first processor is configured to output, as first printed material from the first image printing unit, inquiry information containing identification information for the first image forming apparatus,
the second processor is configured to use the second communication unit to transmit, to a management server that manages usage contract periods, inquiry information acquired by using the second image reading unit to read the first printed material,
the second processor is configured to output, as second printed material from the second image printing unit, use-prohibited state release instruction information transmitted from the management server in response to the transmitted inquiry information, and
the first processor is configured to release the use-prohibited state of the first image forming apparatus according to the use-prohibited state release instruction information acquired by using the first image forming unit to read the second printed material.
